# EUROPÄISCHE PATENTSCHRIFT

(11) **EP 1 636 086 B1**
(45) Veröffentlichungstag und Bekanntmachung des Hinweises auf die Patenterteilung: **17.09.2008**
(21) Anmeldenummer: 04738643.8
(22) Anmeldetag: 07.06.2004
(51) Int. Cl.: B64C 3/48

(54) **FLÜGEL, INSBESONDERE TRAGFLÜGEL EINES FLUGZEUGS, MIT VERÄNDERBAREM PROFIL**
WING, ESPECIALLY A CARRIER WING OF AN AEROPLANE, HAVING AN ADAPTABLE PROFILE
AILE, NOTAMMENT AILE PORTEUSE D'UN AVION, AYANT UN PROFIL MODIFIABLE

(30) Priorität: 07.06.2003 DE 10325950
(43) Veröffentlichungstag der Anmeldung: 22.03.2006
(73) Patentinhaber: Airbus Deutschland GmbH, 21129 Hamburg (DE)
(72) Erfinder: LONSINGER, Hans, 89129 Langenau-Albeck (DE); PEREZ-SANCHEZ, Juan, 83620 Feldkirchen-Westerham (DE)
(74) Vertreter: Hansmann, Dierk
(86) Internationale Anmeldenummer: PCT/DE2004/001191
(87) Internationale Veröffentlichungsnummer: WO 2004/110861

(56) Entgegenhaltungen:
- EP-A- 1 205 383
- WO-A-02/47976
- DE-A- 19 936 721
- US-A- 4 247 066
- US-A- 4 429 844
- US-A- 6 010 098

## Beschreibung

Die Erfindung betrifft einen Flügel, insbesondere Tragflügel eines Flugzeugs, mit veränderbarem Profil.

Bei Flugzeugen, insbesondere bei Hochleistungsflugzeugen, wird angestrebt, die zur Steuerung und/oder Trimmung des Flugzeugs verwendeten Bereiche des Flügels so auszuführen, dass einerseits die Lenkung der Strömung am Flügel aerodynamisch möglichst günstig ist und andererseits die auftretenden Lasten möglichst gleichmäßig verteilt sind.

Aus der US 4 429 844 ist ein Tragflügel eines Flugzeugs bekannt, welcher an der Oberseite und der Unterseite des Flügels befindliche Beplankungen und an der Flügelspitze einen flexiblen Bereich aufweist, an welchem das Flügelprofil in seiner Wölbung veränderbar ist. Dieser flexible Bereich enthält eine Anzahl von in Spannweitenrichtung des Flügels verlaufenden oberen und unteren Scherenplatten, die als tragende Struktur dienen. Die oberen und unteren Scherenplatten sind jeweils durch ein elastomeres Material miteinander verbunden, so dass Abstand und Winkel der einzelnen Scherenplatten gegeneinander veränderbar sind, um eine Veränderung des Flügelprofils in dem flexiblen Bereich zu ermöglichen. Das elastomere Material bildet gleichzeitig die an der Oberseite und der Unterseite des Flügels befindlichen Beplankungen in diesem flexiblen Bereich. Der durch die besagten Scherenplatten enthaltende flexible Bereich bildet das äußerste Ende eines Vorderkantenbereichs des Flügels an der Flügelspitze und ist in Profilsehnenrichtung des Flügels in seiner Form veränderbar. Weiter ist aus der WO 02/47976 A2 ein aerodynamischer Flügel mit an der Oberseite und der Unterseite des Flügels befindlichen Beplankungen bekannt, der in einem flexiblen Bereich eine variable Wölbung aufweist. Der flexible Bereich des Flügels ist durch mehrere in Spannweitenrichtung verlaufende Holme gebildet, die zwischen der ersten und der zweiten Beplankung des Flügels angeordnet und durch Verstellmechanismen gegeneinander so beweglich sind, dass die Krümmung des Flügelprofils in Flügelsehnenrichtung verstellbar ist.

Die Aufgabe der Erfindung ist es, einen Flügel, insbesondere Tragflügel eines Flugzeugs, mit veränderbarem Profil zu schaffen, welcher einen Bereich mit variablem Profil aufweist, der in Bezug auf Aerodynamik und Lastverteilung möglichst optimal ausgebildet ist.

Vorzugsweise soll der Flügel mit veränderbarem Profil zur Optimierung der Auftriebsverteilung (Trimmung), aber auch zur Rollsteuerung geeignet sein, im letzteren Falle also herkömmliche Querruder ersetzen.

Diese Aufgabe wird durch einen Flügel mit den Merkmalen des Anspruchs 1 gelöst.

Weitere Ausführungsformen sind in den Unteransprüchen angegeben.

Im folgenden werden Ausführungsbeispiele der Erfindung anhand der zeichnung erläutert. Es zeigen:
- Figur 1: eine perspektivische schematisierte Ansicht eines Tragflügels eines Flugzeugs mit veränderbarem Profil, bei dem ein Flügelspitzenbereich über einen flexiblen Bereich in einer Richtung verstellbar ist, die sowohl eine Komponente in Flügeltiefenrichtung als auch eine Komponente in Spannweitenrichtung enthält;
- Figur 2: eine Draufsicht auf den in Figur 1 gezeigten Flügel;
- Figur 3: eine vergrößerte Darstellung des in Figur 2 gekennzeichneten flexiblen Bereichs;
- Figur 4: einen Schnitt durch den flexiblen Bereich und den Flügelspitzenbereich des in den Figuren 1 bis 3 dargestellten Tragflügels gemäß einem ersten Ausführungsbeispiel der Erfindung;
- Figur 5: einen Schnitt durch den flexiblen Bereich eines Tragflügels nach einem weiteren Ausführungsbeispiel der Erfindung, bei der der flexible Bereich durch mehrere in einer Längsrichtung ausgedehnte und zwischen der ersten Beplankung und der zweiten Beplankung des Flügels angeordnete Kastenelemente gebildet ist;
- Figur 6: eine vergrößerte Darstellung, welche eine Ausführungsform einer gelenkigen verbindung zwischen den besagten Kastenelementen und der ersten Beplankung des Tragflügels gemäß der Figur 5 darstellt;
- Figur 7: eine vergrößerte Schnittansicht, welche ein Detail eines Flügelaufbaus gemäß einem anderen Ausführungsbeispiel der Erfindung darstellt;
- Figur 8: eine schematisierte vergrößerte Schnittansicht eines Details eines Antriebs zur verstellung des flexiblen Flügelbereichs; und
- Figuren 9 und 10: Schnittansichten von Abstandshaltern, welche die erste Beplankung und die zweite Beplankung eines Tragflügels unter einem vorgegebenen Abstand halten und gleichzeitig eine relative Verschiebung der beiden in einer vorgegebenen Richtung gestatten.

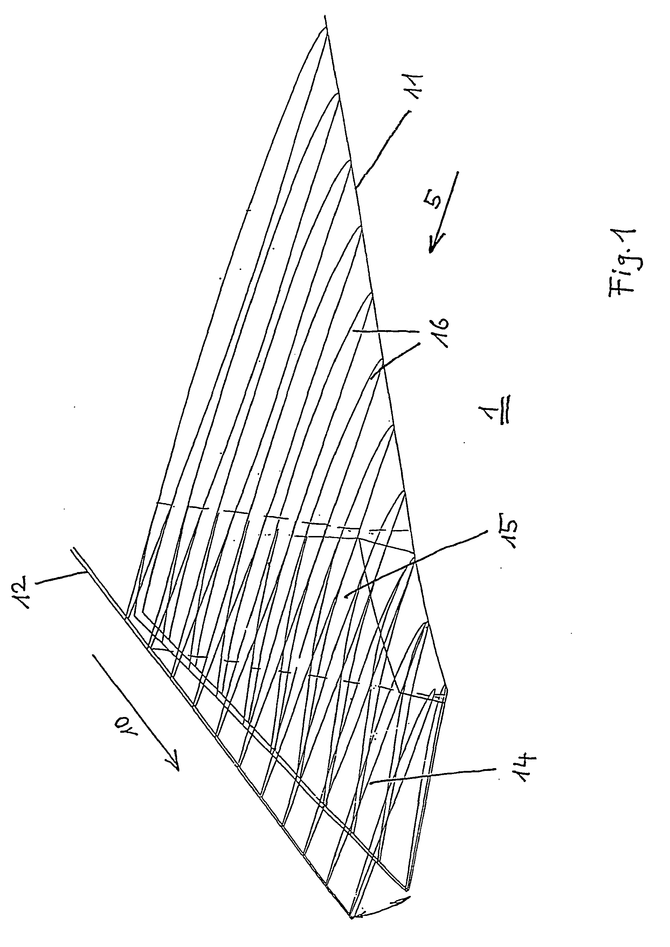

Die perspektivische Darstellung der Figur 1 zeigt einen Tragflügel 1 eines Flugzeugs, nämlich eines Hochleistungsflugzeugs, mit veränderbarem Profil. Der mit dem Bezugszeichen 5 bezeichnete Pfeil bedeutet die Flügeltiefenrichtung, die im wesentlichen in Strömungsrichtung verläuft, und der mit dem Bezugszeichen 10 bezeichnete Pfeil bedeutet die quer dazu verlaufende Spannweitenrichtung. Die in Figur 1 gezeigten Profilschnitte 16 erstrecken sich parallel zur Flügeltiefenrichtung 5. Bezüglich der Flügeltiefenrichtung 5 gibt es einen Vorderkantenbereich 11 und einen Hinterkantenbereich 12 und bezüglich der Spannweitenrichtung 10 gibt es am Ende des Flügels 1 einen Flügelspitzenbereich 14.

Der Flügelspitzenbereich 14 ist über einen flexiblen Bereich 15 mit dem Rest des Flügels 1 verbunden und in einer Richtung verstellbar, die sowohl eine Komponente in Flügeltiefenrichtung 5 als auch eine Komponente in Spannweitenrichtung 10 enthält. Wie aus der Figur 1 ersichtlich ist, verläuft der flexible Bereich 15 schräg zur Flügeltiefenrichtung 5 vom Vorderkantenbereich 11 zum Hinterkantenbereich 12 des Flügels 1 und ist im wesentlichen quer zum Vorderkantenbereich 11 angeordnet, welcher einen ausgeprägten positiven Pfeilungswinkel zur Flügelrichtung 5 zeigt.

Der Flügel 1 hat eine erste Beplankung 55a, nämlich an seiner Oberseite, und eine dieser gegenüberliegende zweite Beplankung 55b, nämlich an seiner Unterseite. In dem flexiblen Bereich 15 ist der Flügel 1 unter Veränderung der Krümmung der ersten Beplankung 55a und der zweiten Beplankung 55b verstellbar, wobei beide Beplankungen 55a, 55b unabhängig von der Einstellung einen im wesentlichen glatten, kontinuierlichen Verlauf zeigen.

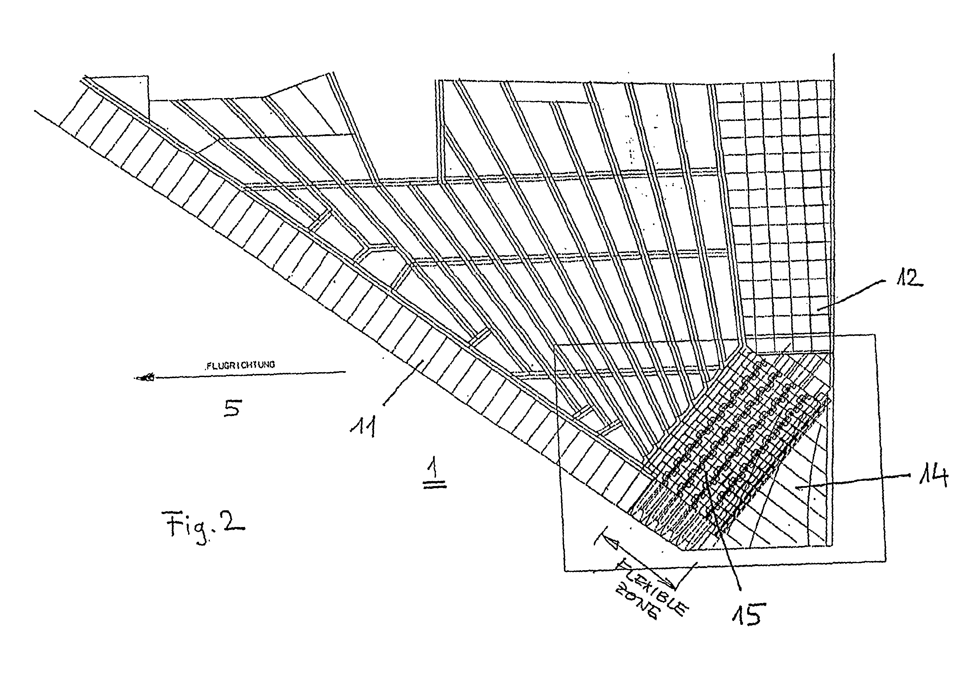

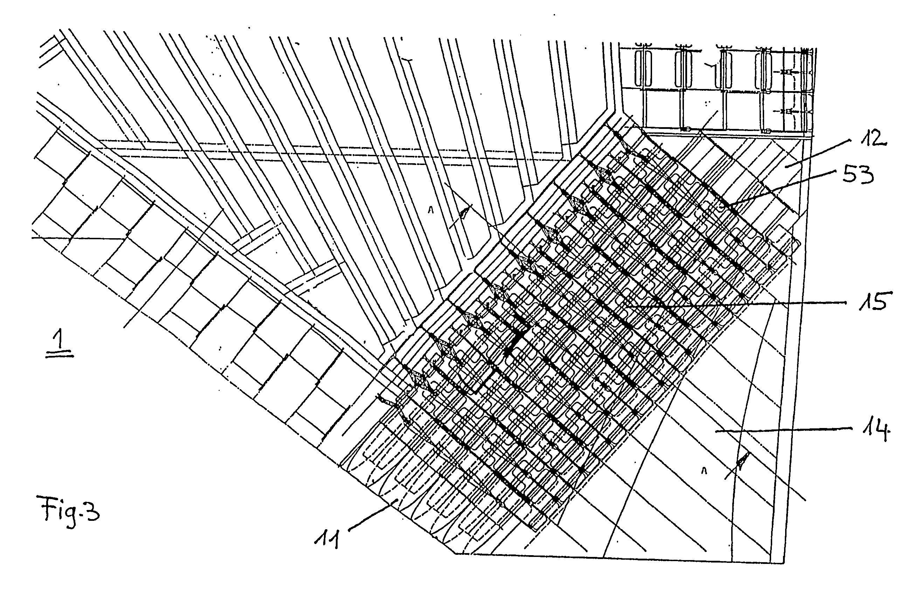

In der in Figur 2 dargestellten Draufsicht auf den Flügel 1 ist die Lage des flexiblen Bereichs 15 näher gezeigt, welcher in Figur 3 nochmals vergrößert dargestellt ist.

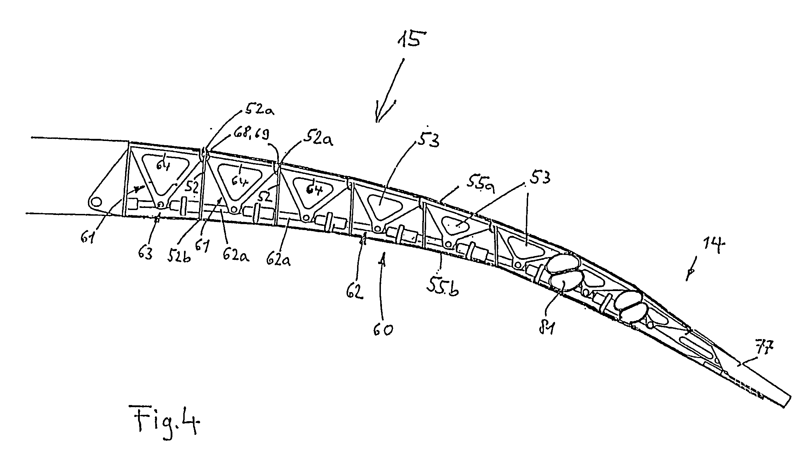

Wie aus Figur 3 ersichtlich ist, umfasst der flexible Bereich 15 mehrere nebeneinander angeordnete, in einer Längsrichtung ausgedehnte Torsionskästen 53, die sich mit ihrer Längsrichtung vom Vorderkantenbereich 11 zum Hinterkantenbereich 12 des Flügels 1 erstrecken, also quer zur Krümmungsrichtung des flexiblen Bereichs 15 verlaufen. Wie Figur 4 zeigt, sind die Torsionskästen 53 aus der ersten Beplankung 55a, der zweiten Beplankung 55b sowie aus mindestens einem in Längsrichtung der Torsionskästen 53 verlaufenden Holm 52 gebildet und sind bis zu einem gewissen Grade gelenkig miteinander verbunden. Die Torsionskästen 53 sind naturgemäß um ihre Längsrichtung torsionssteif, jedoch in Richtung quer dazu im Sinne einer vorgegebenen Veränderung des Flügelprofils in ihrer Form veränderbar.

Ein insgesamt mit dem Bezugszeichen 60 bezeichneter Verstellmechanismus dient der Veränderung der Form der Torsionskästen 53, d.h. von deren Querschnitt quer zu ihrer Längsausdehnung, und damit des Flügelprofils in Ansprache auf ein entsprechendes, von außen zugeführtes Steuersignal. Im einzelnen enthält der Verstellmechanismus 60 zumindest einen, bei dem in Figur 3 und 4 dargestellten Ausführungsbeispiel eine Anzahl von Wirbelkörper oder Wirbeln 61, nämlich eine Anzahl von Wirbelkörpern 61, die hintereinander angeordnet in den jeweiligen Torsionskästen 53 vorgesehen sind, sowie jeweils eine Anzahl von Wirbelkörpern 61 nebeneinander in jedem der einzelnen Torsionskästen 53.

Die wirbelkörper 61 umfassen jeweils ein Übertragungselement 64, das zum Ausgleichen einer Relativbewegung zwischen der ersten, oberen Beplankung 55a und dem Wirbelkörper 61 über ein Pendelgelenk 68 mit der ersten Beplankung 55a in Verbindung steht, und, in Vertikalrichtung beabstandet, eine Verbindungsstelle oder einen Verbindungsbereich 69 zu einer in Ansprache auf das Steuersignal in ihrer Länge veränderlichen Antriebssehne 62a.

Wie aus Figur 4 ersichtlich ist, hat jeder Wirbelkörper 61 im Querschnitt eine im wesentlichen dreieckige Grundform, wobei die obere Seite, also die Basis, des Dreiecks im wesentlichen parallel zur ersten, oberen Beplankung 55a verläuft und das Übertragungselement 64 bildet und die untere Spitze des Dreiecks die mit der Antriebssehne 62a gekoppelte Verbindungsstelle 63 bildet. Somit führt eine Veränderung der Länge der Antriebssehne 62a zu einer Verdrehung der Wirbelkörper 61 im Sinne einer Veränderung der (Querschnitts-) Form der Torsionskästen 53 und damit zu einer Veränderung des Flügelprofils, wie es gewünscht ist. Das Zusammenwirken der Wirkbelkörper 61 und der Antriebssehnen 62a führt zu einer Veränderung der Krümmung des dadurch gebildeten Verstellmechanismus 60, wie es der Veränderung der Krümmung in der Wirbelsäule eines Wirbeltiers ähnelt, weshalb hier für die mit dem Bezugszeichen 61 verwendeten Komponenten der Begriff "Wirbelkörper" oder "Wirbel" verwendet wird. Zum Zwecke einer weitergehenden Offenbarung des den Verstellmechanismus 60 zugrundeliegenden Prinzips wird auf die vorveröffentlichte Patentanmeldung EP-A-1205383 verwiesen.

Die hintereinander angeordneten wirbelkörper 61 sind jeweils über ein Wirbelgelenk 69 miteinander verbunden.

Am Ende des Flügelspitzenbereichs 14 ist ein Endstück 77 vorgesehen, an dem ein Ausgleich einer gegenseitigen Verschiebung der ersten, oberen Beplankung 55a gegen die zweite, untere Beplankung 55b bei Veränderung der Krümmung bzw. Wölbung des flexiblen Bereichs 15 aufgrund der Verformung der Torsionskästen 53 stattfindet. Dazu ist die zweite, untere Beplankung 55b gegen das Endstück 77 verschiebbar gelagert, wobei gleichzeitig Mittel vorgesehen sind, durch die in jeder Verstellposition die Beplankung zuverlässig an dem Endstück 77 gehalten wird. Alternativ kann ein Ausgleich der gegenseitigen Verschiebung auch an anderer Stelle erfolgen.

Das Pendelgelenk 68 ist bei dem in Figur 4 dargestellten Ausführungsbeispiel als "elastisches Gelenk ausgeführt, bei dem Übertragungselement oder Übertragungsbereich 64 eines jeden Wirbels 61 über eine elastische Verbindung einerseits mit der ersten Beplankung 55a und andererseits mit dem zugeordneten Holm 52 verbunden ist.

Bei dem dargestellten Ausführungsbeispiel ist die Anordnung von Wirbelkörper 61 und Antriebssehne 62a jeweils innerhalb der Torsionskästen 53 vorgesehen, alternativ kann diese auch außerhalb derselben vorgesehen sein.

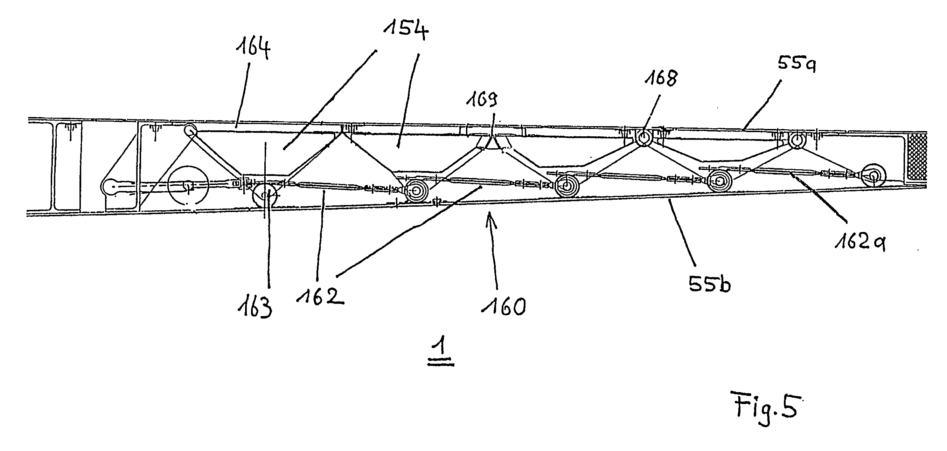

In Figur 5 ist ein weiteres Ausführungsbeispiel der Erfindung dargestellt.

Wie die Querschnittsansicht von Figur 5 zeigt, umfasst der flexible Bereich 11; 12; 15 mehrere Kastenelemente 154, die an ihren Längsseiten an Gelenkbereichen 169 gelenkig verbunden und zwischen der ersten Beplankung 55a und der zweiten Beplankung 55b vorgesehen sind. Die Kastenelemente 154 sind in einer, in Figur 5 senkrecht zur Zeichenebene verlaufenden, Längsrichtung ausgedehnt und haben im Querschnitt eine im wesentlichen dreieckige Grundform.

Mit der ersten Beplankung 55a stehen die Kastenelemente 154 an einem Übertragungsbereich 164 in Verbindung, welcher durch die oben liegende Basis des besagten Dreiecks gebildet ist, und sie verfügen über einen in Vertikalrichtung beabstandeten verbindungsbereich 163, welcher durch die der Basis gegenüberliegende spitze des Dreiecks gebildet ist und der mit einem insgesamt mit dem Bezugszeichen 160 bezeichneten Verstellmechanismus gekoppelt ist. Dieser dient dazu, die Kastenelemente 154 im Sinne einer Veränderung des Flügelprofils in Ansprache auf ein entsprechendes Steuersignal um die Gelenkbereiche 169 zu verschwenken.

Der Verstellmechanismus 160 umfasst eine jeweilige mit dem Verbindungsbereich 163 der Kastenelemente 154 gekoppelte und in ihrer Länge veränderliche Antriebssehne 162a, wobei eine Veränderung von deren Länge eine verdrehung der Kastenelemente 154 im Sinne einer Veränderung der Form des Flügelprofils bewirkt. Die hintereinander angeordneten Kastenelemente 154 sind jeweils mit einer Antriebssehne 162a gekoppelt.

Zum Ausgleichen einer Relativbewegung zwischen der ersten Beplankung 55a und dem Kastenelement 154 dienen Pendelgelenke 168, welche zwischen den Übertragungsbereich 164 der Kastenelemente 154 und die erste Beplankung 55a gekoppelt sind.

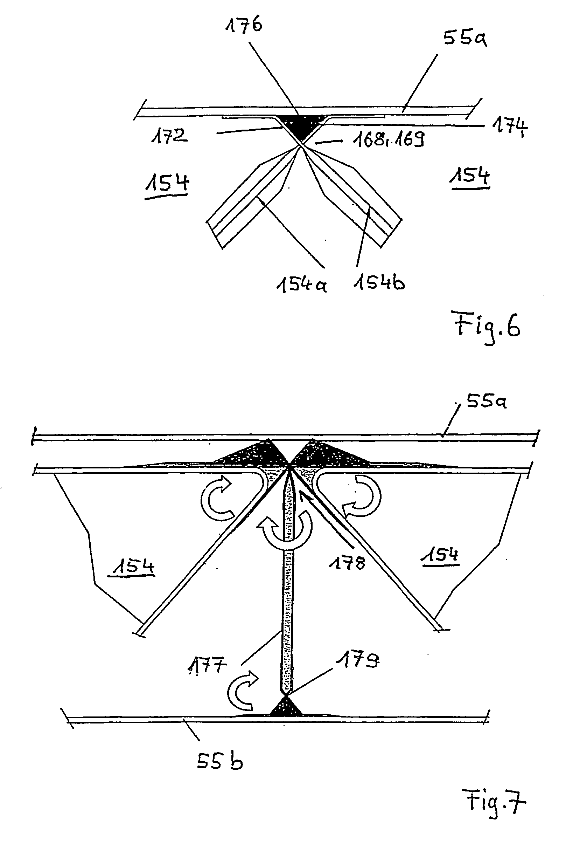

Wie die Figuren 6 und 7 zeigen, die vergrößerte Ausschnitte des Bereichs darstellen, in welchem die Kastenelemente 154 an ihren Längsseiten miteinander und andererseits mit der ersten Beplankung 55a des Tragflügels 1 gekoppelt sind, sind bei den dargestellten Ausführungsbeispielen die Gelenkbereich 169 und die Pendelgelenke 168 durch elastische Gelenkelemente gebildet. Diese elastischen Gelenkelemente umfassen biegeelastische Bänder, beispielsweise aus einem federelastischen Metall oder Kunststoff, wobei bei den dargestellten Ausführungsbeispielen die Gelenkbereiche 169 und die Pendelgelenk 168 durch ein gemeinsames Element gebildet sind. Diese gemeinsame Elemente 168, 169 sind durch sich jeweils in Verlängerung der Schenkel 154a, 154b der dreieckförmigen Kastenelemente 154 erstreckende, mit einer Seite an diesen festgelegte, einander kreuzende biegeelastische Bänder 172, 174 gebildet, deren andere Seite an der ersten Beplankung 55a des Flügels 1 festgelegt ist. In dem von den einander kreuzenden biegeelastischen Bändern 172, 174 und der ersten Beplankung 55a begrenzten Raum ist ein Füllstück 176 vorgesehen, welches insbesondere aus einem elastischen Material besteht, vergleiche Figur 6.

Bei dem in Figur 7 dargestellten Ausführungsbeispiel ist weiterhin ein Steg- oder Holmelement 177 vorgesehen, welches sich in Richtung von der ersten Beplankung 55a zur zweiten Beplankung 55b erstreckt und welches mit seiner Längsrichtung parallel zur Längsrichtung der Kastenelemente 154 verläuft. Dieses Steg- oder Holmelement 177 ist mit einer Seite über eine erste gelenkige Verbindung 178 an der ersten Beplankung 55a oder nahe derselben an der Seite der Kastenelemente 154 festgelegt, bei dem hier gezeigten Ausführungsbeispiel an dem durch den Gelenkbereich 169 und das Pendelgelenk 168 gebildeten gemeinsamen Gelenk, und mit der anderen Seite gegenüberliegend über eine zweite gelenkige Verbindung 179 an der zweiten Beplankung 55b. Die erste gelenkige Verbindung 178 und die zweite gelenkige Verbindung 179 sind durch elastische Bänder gebildet.

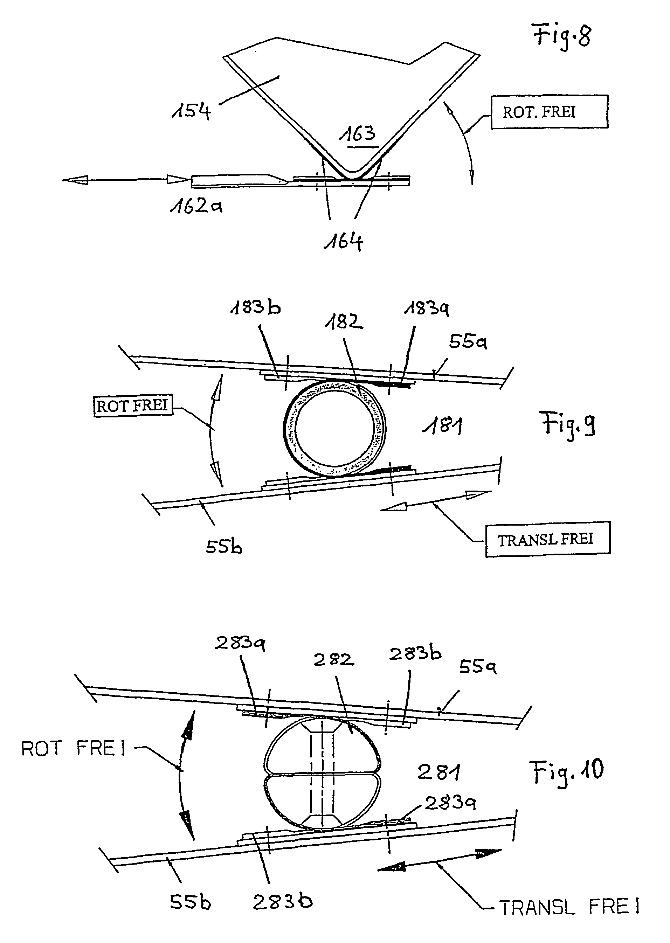

Wie Figur 8 zeigt, ist die Antriebssehne 162a über ein elastisches Band 164 mit dem Verbindungsbereich 163 der Kastenelemente 154 gekoppelt.

Die Figuren 9 und 10 zeigen Querschnittsansichten von Abstandshaltern 181; 281, die zwischen der ersten Beplankung 55a und der zweiten Beplankung 55b vorgesehen sind, durch welche die Beplankungen 55a, 55b in einem vorgegebenen Abstand gehalten und gleichzeitig eine Relativbewegung zwischen diesen bei Veränderung des Flügelprofils ermöglicht wird.

Die Abstandshalter 181; 281 umfassen ein walzenförmiges Element 182; 282 und eine Anordnung aus flexiblen Bändern 183a, b; 283a, b, durch welche die walzenförmigen Elemente 182; 282 im Sinne einer Rollbewegung zwischen der ersten Beplankung 55a und der zweiten Beplankung 55b bei Relativbewegung zwischen diesen geführt werden. Die flexiblen Bänder 183a, b; 283a, b sind um die walzenförmigen Elemente 182; 282 herumgeführt und mit ihren Enden an der ersten Beplankung 55a bzw. der zweiten Beplankung 55b festgelegt.

Bei dem in Figur 9 dargestellten Ausführungsbeispiel ist das flexible Band 183a auf der rechten Seite des walzenförmigen Elements 182 an der ersten Beplankung 55a festgelegt und um das walzenförmige Element 182 herum wieder zu dessen rechter Seite zurückgeführt und an der zweiten Beplankung 55b festgelegt. Ein weiteres flexibles Band 183b ist spiegelverkehrt dazu auf der linken Seite des walzenförmigen Elements 182 an der ersten Beplankung 55a festgelegt um das walzenförmige Element 182 herum wieder an dessen linke Seite 98 geführt und an der zweiten Beplankung 55b festgelegt. Hierdurch ist eine Rollbewegung des warzenförmigen Elements 182 zwischen der ersten Beplankung 55a und der zweiten Beplankung 55b möglich und gleichzeitig das erstere sicher geführt und gehalten.

Bei dem in Figur 10 dargestellten Ausführungsbeispiel ist das walzenförmige Element 282 mittig gekeilt und jedes der flexiblen Bänder 283a, b ist unter Umkehrung des Wickelsinns durch die Mitte des walzenförmigen Elements 282 geführt und verschiedensinnig jeweils halb um diese gewickelt. So ist ein flexibles Band 283a auf der linken Seite des walzenförmigen Elements 282 an der ersten Beplankung 55a festgelegt, um das walzenförmige Element 282 herum und durch dessen Mitte wieder an seine linke Seite zurückgeführt und unter Umkehrung des Wickelsinns um dieses herum auf dessen rechter Seite an der zweiten Beplankung 55b festgelegt. Ein weiteres flexibles Band 283b ist umgekehrt auf der rechten Seite des walzenförmigen Elements 282 an der ersten Beplankung 55a festgelegt, um das walzenförmige Element 282 herum und durch dessen Mitte zurückgeführt und unter umkehrung des Wickelsinns weiter um das walzenförmige Element 282 herumgeführt und an dessen linker Seite festgelegt. Auch hier erlauben die flexiblen Bänder 283a, b eine Relativbewegung der Beplankungen 55a, 55b gegeneinander, wobei das walzenförmige Element 282 unter einer Rollbewegung sicher zwischen den Beplankungen 55a, 55b geführt und gehalten wird.

## Patentansprüche

1. Flügel, insbesondere Tragflügel eines Flugzeugs, mit veränderbarem Profil, der sich in im wesentlichen in Strömungsrichtung verlaufender Flügeltiefenrichtung (5) und quer dazu in Spannweitenrichtung (10) erstreckt und eine erste Beplankung (55a) und eine dieser gegenüberliegende zweite Beplankung (55b) aufweist und der bezüglich der Flugeltiefenrichtung (5) einen Vorderkantenbereich (11) und einen Hinterkantenbereich (12) sowie bezüglich der Spannweitenrichtung (10) am Ende des Flügels (1) einen Flügelspitzenbereich (14) aufweist, und mit einem am Flugelspitzenbereich (14) angeordneten flexiblen Bereich (15), durch den das Profil des Flugelspitzenbereichs (14) verstellbar ist, **dadurch gekennzeichnet, dass** der flexible Bereich (15) schräg zur Flügeltiefenrichtung (5) angeordnet ist und sich vom Vorderkantenbereich (11) zum Hinterkantenbereich (12) des Flügels (1) erstreckt, wobei der Flügelspitzenbereich (14) über den flexiblen Bereich (15) mit dem Rest des Flügels verbunden ist und die Krümmungsrichtung des flexiblen Bereichs (15), in der das Flügelprofil in seiner Form veränderbar ist, quer zu der Richtung, in welcher sich der flexible Bereich vom Vorderkantenbereich (11) zum Hinterkantenbereich (12) des Flügels (1) erstreckt, verläuft, und dass ein Verstellmechanismus (60) vorgesehen ist, welcher derart ausgeführt ist, dass er den flexiblen Bereich (15) in der Richtung krummt, welche quer zu der Richtung, in welcher sich der flexible Bereich (15) vom Vorderkanten (11) zum Hinterkantenbereich (12) des Flügels erstreckt, verläuft, so dass der Flugelspitzenbereich (14) in einer Richtung verstellbar ist, die sowohl eine Komponente in Flügeltiefenrichtung (5) als auch eine Komponente in Spannweitenrichtung (10) enthält.

2. Flügel nach Anspruch 1, **dadurch gekennzeichnet, dass** der Vorderkantenbereich (11) mit positivem Pfeilungswinkel zur Flügeltiefenrichtung (5) verlauft, und dass der flexible Bereich (15) im wesentlichen quer zum Vorderkantenbereich (11) angeordnet ist. ,

3. Flügel nach Anspruch 1 oder 2, **dadurch gekennzeichnet, dass** in dem flexiblen Bereich (15) die Wölbung des Flügels (1) unter Veränderung der Krümmung der ersten Beplankung (55a) und der zweiten Beplankung (55b) verstellbar ist.

4. Flügel nach Anspruch 3, **dadurch gekennzeichnet, dass** der flexible Bereich (15) mehrere nebeneinander angeordnete, in einer Längsrichtung ausgedehnte Torsionskasten (53) umfaßt, die aus der ersten Beplankung (55a), der zweiten Beplankung (55b), sowie aus mindestens einem in Längsrichtung der Torsionskästen (53) verlaufenden Holm (52) gebildet und gelenkig miteinander verbunden sind und die um ihre Längsrichtung torsionssteif und in Richtung quer dazu zur Veränderung des Flügelprofils in ihrer Form veränderbar sind, und dass der Verstellmechanismus (60) zur Veränderung der Form der Torsionskästen (53) und damit des Flügelprofils in Ansprache auf ein von außen zugeführtes, entsprechendes Steuersignal vorgesehen ist.

5. Flügel nach Anspruch 4, **dadurch gekennzeichnet, dass** der Verstellmechanismus (60) zumindest einen Wirbelkörper (61) mit einem mit der ersten Beplankung (55a) in Verbindung stehenden Übertragungselement (64) und mit einer in Vertikalrichtung beabstandeten Verbindungsstelle (63) zu einer in Ansprache auf das Steuersignal in ihrer Länge veränderlichen Antriebssehne (62a) umfaßt, wobei eine Veränderung der Länge der Antriebssehne (62a) eine Verdrehung des zumindest einen Wirbelkörpers (61) im Sinne einer Veränderung der Form der Torsionskasten (53) und damit des Flügelprofils bewirkt.

6. Flügel nach Anspruch 5, **dadurch gekennzeichnet, dass** das Übertragungselement (64) zum Ausgleichen der Relativbewegung zwischen der ersten Beplankung (55a) und dem Wirbelkörper (61) über ein Pendelgelenk (68) mit der ersten Beplankung (55a) in Verbindung steht.

7. Flügel nach Anspruch 5 oder 6, **dadurch gekennzeichnet, dass** mehrere hintereinander angeordnete Wirbelkörper (61) vorgesehen sind, die mit jeweils einer Antriebssehne (62a) in Verbindung stehen.

8. Flügel nach Anspruch 5, 6 oder 7, **dadurch gekennzeichnet, dass** die Anordnung aus dem zumindest einen Wirbel (61) und der zumindest einen Antriebssehne (62a) innerhalb der Torsionskästen (53) vorgesehen ist.

9. Flügel nach Anspruch 5, 6 oder 7, **dadurch gekennzeichnet, dass** die Anordnung aus dem zumindest einen Wirbelkörper (61) und der zumindest einen Antriebssehne (62a) außerhalb der Torsionskästen (53) vorgesehen ist.

10. Flügel nach einem der Ansprüche 5 bis 9, **dadurch gekennzeichnet, dass** das Pendelgelenk (68) als elastisches Gelenk ausgeführt ist, bei dem jedes Übertragungselement (64) über elastische Verbindungen einerseits mit der ersten Beplankung (55a) und mit einem Holm (52) verbunden ist.

11. Flügel nach einem der Ansprüche 1 bis 3, **dadurch gekennzeichnet, dass** der flexible Bereich (15) ein oder mehrere in einer Längsrichtung ausgedehnte Kastenelemente (154) umfaßt, die an ihren Längsseiten Gelenkbereiche (169) aufweisen, an denen sie gelenkig miteinander verbunden sind, und die zwischen der ersten Beplankung (55a) und der zweiten Beplankung (55b) vorgesehen sind, wobei die Kastenelemente (154) einen quer zu ihrer Längsrichtung verlaufenden Übertragungsbereich (164), der mit der ersten Beplankung (55a) in Verbindung steht, und einen in Vertikalrichtung beabstandeten Verbindungsbereich (163), mit dem ein Verstellmechanismus (160) zum Bewegen der Kastenelemente (154) um die Gelenkbereiche (169) im Sinne einer Veränderung des Flugelprofils in Ansprache auf ein entsprechendes Steuersignal vorgesehen ist, aufweisen.

12. Flügel nach Anspruch 11, **dadurch gekennzeichnet, dass** die Kastenelemente (154) im Querschnitt eine im wesentlichen dreieckige Grundform haben, wobei der Übertragungsbereich (164) durch die Basis und der Verbindungsbereich (163) durch die dieser gegenüberliegende Spitze des Dreiecks gebildet sind.

13. Flügel nach Anspruch 11 oder 12, **dadurch gekennzeichnet, dass** der Verstellmechanismus (160) eine mit dem Verbindungsbereich (163) der Kastenelemente (154) gekoppelte, in ihrer Länge veränderliche Antriebssehne (162a) umfasst, wobei eine Veränderung der Länge der Antriebssehne (162a) eine Verdrehung des zumindest einen Kastenelements (154) im sinne einer Veränderung der Form des Flügelprofils bewirkt.

14. Flügel nach Anspruch 11, 12 oder 13, **dadurch gekennzeichnet, dass** mehrere hintereinander angeordnete Kastenelemente (154) vorgesehen sind, die jeweils mit einer Antriebssehne (162a) gekoppelt sind.

15. Flügel nach Anspruch 11, 12, 13 oder 14, **dadurch gekennzeichnet, dass** zum Ausgleichen einer Relativbewegung zwischen der ersten Beplankung (55a) und dem Kastenelement (154) dienende Pendelgelenke (168) vorgesehen sind, über die der Übertragungsbereich (164) der Kastenelemente (154) mit der ersten Beplankung (55a) gekoppelt ist.

16. Flügel nach einem der Ansprüche 11 bis 15, **dadurch gekennzeichnet, dass** die Gelenkbereiche (169) und/oder die Pendelgelenke (168) durch elastische Gelenkelemente gebildet sind.

17. Flügel nach Anspruch 16, **dadurch gekennzeichnet, dass** die Gelenkbereiche (169) und/oder die Pendelgelenke (168) durch biegeelastische Bänder (172, 174) gebildet sind.

18. Flügel nach einem der Ansprüche 11 bis 17, **dadurch gekennzeichnet, dass** die Gelenkbereiche (169) und die Pendelgelenke (168) durch ein gemeinsames Gelenk gebildet sind.

19. Flügel nach Anspruch 18, **dadurch gekennzeichnet, dass** das gemeinsame Gelenk (168, 169) durch sich jeweils in Verlängerung der Schenkel (154a, 154b) der dreieckigen Kastenelemente (154) erstreckende, mit einer Seite an diesen festgelegte, einander kreuzende biegeelastische Bänder (172, 174) gebildet ist, deren andere Seite an der ersten Beplankung (55a) des Flügels (1) festgelegt ist.

20. Flügel nach Anspruch 19, **dadurch gekennzeichnet, dass** in dem von den einander kreuzenden biegeelastischen Bändern (172, 174) und der ersten Beplankung (55a) begrenzten Raum ein Füllstück (176), insbesondere bestehend aus einem elastischen Material, vorgesehen ist.

21. Flügel nach einem der Ansprüche 11 bis 20, **dadurch gekennzeichnet, dass** ein sich in Richtung von der ersten Beplankung (55a) zur zweiten Beplankung (55b) erstreckendes und mit seiner Längsrichtung parallel zur Längsrichtung der Kastenelemente (154) verlaufendes Steg- oder Holmelement (177) vorgesehen ist, das mit einer Seite über eine erste gelenkige Verbindung (178) an der ersten Beplankung (55a) oder nahe der ersten Beplankung (55a) an der Seite der Kastenelemente (154), insbesondere am Gelenkbereich (169) und/oder am Pendelgelenk (168), und mit der anderen Seite gegenüberliegend über eine zweite gelenkige Verbindung (179) an der zweiten Beplankung (55b) festgelegt ist.

22. Flügel nach Anspruch 21, **dadurch gekennzeichnet, dass** die erste gelenkige verbindung (178) und/oder die zweite gelenkige Verbindung (179) durch elastische Bänder gebildet ist.

23. Flügel nach einem der Ansprüche 13 bis 22, **dadurch gekennzeichnet, dass** die Antriebssehne (162a) über ein elastisches Band (164) mit dem Verbindungsbereich (163) der Kastenelemente (154) gekoppelt ist.

24. Flügel nach einem der Ansprüche 11 bis 23, **dadurch gekennzeichnet, dass** zwischen der ersten Beplankung (55a) und der zweiten Beplankung (55b) ein Abstandshalter (181; 281) vorgesehen ist, durch den die Beplankungen (55a, 55b) in einem vorgegebenen Abstand gehalten werden und gleichzeitig eine Relativbewegung zwischen diesen bei Veränderung des Flügelprofils ermöglicht wird.

25. Flügel nach Anspruch 24, **dadurch gekennzeichnet, dass** der Abstandshalter (181; 281) ein walzenförmiges Element (182; 282) und eine flexible Bandanordnung (183a, b; 283a, b) zur Führung des walzenförmigen Elements (182; 282) im Sinne einer Rollbewegung des walzenförmigen Elements (182; 282) zwischen der ersten Beplankung (55a) und der zweiten Beplankung (55b) bei einer Relativbewegung zwischen diesen enthält.

26. Flügel nach Anspruch 25, **dadurch gekennzeichnet, dass** die flexible Badanordnung (183a, b: 283a, b) mindestens ein um das walzenförmige Element (182; 282) herumgeführtes und mit seinen Enden an der ersten bzw. der zweiten Beplankung (55a, 55b) festgelegtes flexibles Band enthält.

27. Flügel nach Anspruch 26, **dadurch gekennzeichnet, dass** das walzenförmige Element (282) mittig geteilt ist und dass das flexible Band (283a, b) unter Umkehrung des Wickelsinns durch die Mitte des walzenförmigen Elements (282) und verschiedensinnig jeweils halb um dieses herum geführt ist.

## Claims

1. wing, in particular a carrier wing of an aircraft, with a variable profile, which extends in a wing chord direction (5), running essentially in the flow direction, and transversely thereto in a wing span direction (10) and comprises a first cover skin (55a) and a second cover skin (55b) opposite the latter, and which comprises, relative to the wing chord direction (5), a leading edge region (11) and a trailing edge region (12) and also, relative to the wing span direction (10), a wing tip region (14) at the end of the wing (1), and with a flexible region (15) which is arranged at the wing tip region (14) and by means of which the profile of the wing tip region (14) can be adjusted, **characterised in that** the flexible region (15) is arranged at an angle to the wing chord direction (5) and extends from the leading edge region (11) to the trailing edge region (12) of the wing (1), wherein the wing tip region (14) is connected to the rest of the wing via the flexible region (15) and the direction of curvature of the flexible region (15), in which the shape of the wing profile can be varied, runs transversely to the direction in which the flexible region extends from the leading edge region (11) to the trailing edge region (12) of the wing (1), and **in that** an adjustment mechanism (60) is provided which is designed in such a way that it curves the flexible region (15) in the direction running transversely to the direction in which the flexible region (15) extends from the leading edge (11) to the trailing edge region (12) of the wing, so that the wing tip region (14) can be adjusted in a direction which contains both a component in the wing chord direction (5) and a component in the wing span direction (10).

2. Wing according to claim 1, **characterised in that** the leading edge region (11) runs at a positive sweep angle relative to the wing chord direction (5), and **in that** the flexible region (15) is arranged substantially transversely to the leading edge region (11).

3. Wing according to claim 1 or 2, **characterised in that,** in the flexible region (15), the camber of the wing (1) can be adjusted by varying the curvature of the first cover skin (55a) and of the second cover skin (55b).

4. Wing according to claim 3, **characterised in that** the flexible region (15) comprises a plurality of torsion boxes (53) arranged next to one another and extending in a longitudinal direction, said torsion boxes being formed of the first cover skin (55a), the second cover skin (55b) and at least one spar (52) which runs in the longitudinal direction of the torsion boxes (53), and being connected to one another in an articulated manner, which torsion boxes are resistant to torsion about their longitudinal direction and can be varied in terms of their shape in a direction transverse thereto so as to change the wing profile, and **in that** the adjustment mechanism (60) is provided for changing the shape of the torsion boxes (53) and thus of the wing profile in response to a corresponding control signal supplied from outside.

5. Wing according to claim 4, **characterised in that** the adjustment mechanism (60) comprises at least one vertebral body (61) with a transmission element (64) which is connected to the first cover skin (55a) and with a connection point (63), at a distance therefrom in the vertical direction, to a drive line (62a) which can be varied in terms of its length in response to the control signal, wherein a change in length of the drive line (62a) causes a rotation of the at least one vertebral body (61) in such a way as to change the shape of the torsion boxes (53) and thus of the wing profile.

6. wing according to claim 5, **characterised in that** the transmission element (64) for compensating the relative movement between the first cover skin (55a) and the vertebral body (61) is connected to the first cover skin (55a) via a pivot joint (68).

7. Wing according to claim 5 or 6, **characterised in that** a plurality of vertebral bodies (61) are provided which are arranged one behind the other and are each connected to a drive line (62a).

8. Wing according to claim 5, 6 or 7, **characterised in that** the arrangement consisting of the at least one vertebra (61) and the at least one drive line (62a) is provided inside the torsion boxes (53).

9. Wing according to claim 5, 6 or 7, **characterised in that** the arrangement consisting of the at least one vertebral body (61) and the at least one drive line (62a) is provided outside the torsion boxes (53).

10. Wing according to any one of claims 5 to 9, **characterised in that** the pivot joint (68) is designed as an elastic joint, in which each transmission element (64) is connected via elastic connections at one side to the first cover skin (55a) and to a spar (52).

11. Wing according to any one of claims 1 to 3, **characterised in that** the flexible region (15) comprises one or more box elements (154) extending in a longitudinal direction, which have on their longitudinal sides joint regions (169) at which they are connected to one another in an articulated manner, and which are provided between the first cover skin (55a) and the second cover skin (55b), wherein the box elements (154) have a transmission region (164) which runs transversely to their longitudinal direction and which is connected to the first cover skin (55a), and a connection region (163) which is located at a distance therefrom in the vertical direction and to which there is connected an adjustment mechanism (160) for moving the box elements (154) about the joint regions (169) in such a way as to change the wing profile in response to a corresponding control signal.

12. Wing according to claim 11, **characterised in that** the box elements (154) have a substantially triangular basic shape in cross section, wherein the transmission region (164) is formed by the base and the connection region (163) is formed by the tip of the triangle located opposite said base.

13. Wing according to claim 11 or 12, **characterised in that** the adjustment mechanism (160) comprises a drive line (162a) which is coupled to the connection region (163) of the box elements (154) and can be varied in terms of its length, wherein a change in length of the drive line (162a) causes a rotation of the at least one box element (154) in such a way as to change the shape of the wing profile.

14. Wing according to claim 11, 12 or 13, **characterised in that** a plurality of box elements (154) are provided which are arranged one behind the other and are each coupled to a drive line (162a).

15. Wing according to claim 11, 12, 13 or 14, **characterised in that** pivot joints (168) are provided which serve to compensate a relative movement between the first cover skin (55a) and the box element (154) and via which the transmission region (164) of the box elements (154) is coupled to the first cover skin (55a).

16. Wing according to any one of claims 11 to 15, **characterised in that** the joint regions (169) and/or the pivot joints (168) are formed by elastic joint elements.

17. Wing according to claim 16, **characterised in that** the joint regions (169) and/or the pivot joints (168) are formed by flexible elastic bands (172, 174).

18. Wing according to any one of claims 11 to 17, **characterised in that** the joint regions (169) and the pivot joints (168) are formed by a common joint.

19. Wing according to claim 18, **characterised in that** the common joint (168, 169) is formed by intersecting flexible elastic bands (172, 174) which extend in each case in the extension of the shanks (154a, 154b) of the triangular box elements (154) and are fixed thereto at one side, the other side of said bands being fixed to the first cover skin (55a) of the wing (1).

20. Wing according to claim 19, **characterised in that** a filler piece (176), in particular consisting of an elastic material, is provided in the space delimited by the intersecting flexible elastic bands (172, 174) and the first cover skin (55a).

21. Wing according to any one of claims 11 to 20, **characterised in that** a web or spar element (177) is provided which extends in the direction from the first cover skin (55a) to the second cover skin (55b) and runs with its longitudinal direction parallel to the longitudinal direction of the box elements (154), which web or spar element is secured at one side via a first articulated connection (178) to the first cover skin (55a) or close to the first cover skin (55a) at the side of the box elements (154), in particular at the joint region (169) and/or at the pivot joint (168), and at the other side located opposite is secured via a second articulated connection (179) to the second cover skin (55b).

22. Wing according to claim 21, **characterised in that** the first articulated connection (178) and/or the second articulated connection (179) is formed by elastic bands.

23. Wing according to any one of claims 13 to 22, **characterised in that** the drive line (162a) is coupled via an elastic band (164) to the connection region (163) of the box elements (154).

24. Wing according to any one of claims 11 to 23, **characterised in that** a spacer (181; 281) is provided between the first cover skin (55a) and the second cover skin (55b), by means of which spacer the cover skins (55a, 55b) are kept at a predefined distance from one another and at the same time a relative movement between said cover skins is possible when changing the wing profile.

25. Wing according to claim 24, **characterised in that** the spacer (181; 281) contains a roller-shaped element (182; 282) and a flexible band arrangement (183a, b; 283a, b) for guiding the roller-shaped element (182; 282) so as to bring about a rolling movement of the roller-shaped element (182; 282) between the first cover skin (55a) and the second cover skin (55b) during a relative movement between said cover skins.

26. Wing according to claim 25, **characterised in that** the flexible band arrangement (183a, b; 283a, b) contains at least one flexible band which is guided around the roller-shaped element (182; 282) and is secured at its ends to the first and the second cover skin (55a, 55b) respectively.

27. Wing according to claim 26, **characterised in that** the roller-shaped element (282) is split in the centre, and **in that** the flexible band (283a, b) is guided in each case half-way around the roller-shaped element (282) in opposite directions by reversing the direction of winding through the centre thereof.

## Revendications

1. Aile, notamment aile porteuse d'un avion, ayant un profil modifiable qui s'étend essentiellement selon la direction de la profondeur (5) de l'aile, à savoir celle de l'écoulement, et selon la direction de l'envergure (10) de l'aile perpendiculaire à la première, cette aile présentant un premier revêtement (55a) et un second revêtement (55b) opposé au premier, avec, par rapport à la direction de la profondeur (5) de l'aile une zone marginale avant (11) et une zone marginale arrière (12) ainsi que, par rapport à la direction de l'envergure (10) de l'aile, à l'extrémité de cette aile (1) une zone de pointe d'aile (14) avec sur cette zone, une zone flexible (15) par laquelle le profil de pointe d'aile (14) peut varier, **caractérisée en ce que**
- la zone flexible (15) est oblique par rapport à la direction de la profondeur de l'aile (5) et s'étend de la zone marginale avant (11) à la zone marginale arrière (12) de l'aile (1),
- la zone de pointe d'aile (14) est reliée au reste de l'aile par la zone flexible (15) dont la direction de la courbure selon laquelle la forme du profil de l'aile peut varier est perpendiculaire à la direction selon laquelle la zone flexible (15) s'étend de la zone marginale avant (11) à la zone marginale arrière (12) de l'aile (1),
- il est prévu un mécanisme de réglage (6) conçu de manière à courber la zone flexible (15) dans la direction qui est perpendiculaire à celle selon laquelle la zone flexible (15) s'étend de la zone marginale avant (11) à la zone marginale arrière (12) de l'aile, de sorte que la zone de pointe d'aile (14) peut être déplacée dans une direction qui présente à la fois une composante dans la direction de la profondeur de l'aile (5) et une composante dans la direction de l'envergure de l'aile (10).

2. Aile selon la revendication 1, **caractérisée en ce que** la zone marginale avant (11) fait avec la direction de l'envergure de l'aile (5) un angle de flèche d'aile positif, et que la zone flexible (15) est essentiellement perpendiculaire à la zone marginale avant (11).

3. Aile selon la revendication 1 ou 2, **caractérisée en ce que** dans la zone flexible (15) la courbure de l'aile (1) peut être réglée par variation de la courbure du premier revêtement (55a) et de celle du second revêtement (55b).

4. Aile selon la revendication 3, **caractérisée en ce que** la zone flexible (15) comprend plusieurs caissons de torsion (53) qui s'étendent côte à côte selon la direction longitudinale, en étant constitués par le premier revêtement (55a), par le second revêtement (55b) et par au moins un longeron (52) disposé selon la direction longitudinale des caissons de torsion (53), que ces caissons sont reliés entre eux avec articulation en étant rigides en torsion autour de leur direction longitudinale et peuvent, pour faire varier le profil de l'aile, varier dans leur forme sous l'action d'un mécanisme de réglage (60) qui, pour faire varier la forme des caissons de torsion (53) et corrélativement celle du profil de l'aile, est prévu en réponse à un signal de commande correspondant, amené de l'extérieur.

5. Aile selon la revendication 4, **caractérisée en ce que** le mécanisme de réglage (60) comprend au moins un corps vertébral (61) présentant un élément de transmission (64) relié au premier revêtement (55a) ainsi qu'un point (63) espacé en direction verticale de liaison avec un câble d'entraînement (62a) dont la longueur peut varier en réponse au signal de commande, cette variation de longueur produisant une torsion du corps vertébral (61) au nombre d'un au moins, de sorte qu'il en résulte une variation de la forme des caissons de torsion (53) et donc du profil d'aile.

6. Aile selon la revendication 5, **caractérisée en ce que** l'élément de transmission (64), pour compenser le déplacement relatif du premier revêtement (55a) et du corps vertébral (61) est relié à ce premier revêtement (55a) par une articulation pendulaire (68).

7. Aile selon la revendication 5 ou 6, **caractérisée en ce que** sont prévus plusieurs corps vertébraux (61) reliés chacun à un câble d'entraînement (62a).

8. Aile selon la revendication 5, 6 ou 7, **caractérisée en ce que** le système constitué d'au moins un corps vertébral (6) et d'au moins un câble d'entraînement (62a) est prévu à l'intérieur des caissons de torsion (53).

9. Aile selon la revendication 5, 6 ou 7, **caractérisée en ce que** le système constitué d'au moins un corps vertébral (6) et d'au moins un câble d'entraînement (62a) est prévu à l'extérieur des caissons de torsion (53).

10. Aile selon une des revendications 5 à 9, **caractérisée en ce que** l'articulation pendulaire (68) est une articulation élastique dans laquelle chaque élément de transmission (64) est relié par des liaisons élastiques d'un côté au premier revêtement (55a) et à un longeron (52).

11. Aile selon une des revendications 1 à 3, **caractérisée en ce que** la zone flexible (15) comprend un ou plusieurs éléments de caisson (154) qui s'étendent en direction longitudinale en présentant sur leurs côtés longitudinaux des zones d'articulation (169) le long desquelles ils sont articulés entre eux et qui sont prévues entre le premier revêtement (55a) et le second revêtement (55b), les éléments de caisson présentent une zone de transmission (164) disposée perpendiculairement à leur direction longitudinale et reliée au premier revêtement (55a), ainsi qu'une zone de liaison (163), éloignée en direction verticale, et avec laquelle est prévu un mécanisme de réglage (160) pour déplacer les éléments de caisson (154) autour de zones d'articulation (169) de manière à faire varier le profil de l'aile en réponse à un signal de commande correspondant.

12. Aile selon la revendication 11, **caractérisée en ce que** les éléments de caisson (154) présentent en coupe transversale une forme de base qui est essentiellement celle d'un triangle dont la base forme la zone de transmission (164) tandis que la zone de liaison (163) est constituée par la pointe du triangle opposée à cette base.

13. Aile selon le revendication 11 ou 12, **caractérisée en ce que** le mécanisme de réglage (160) comprend un câble d'entraînement (162a) variable en longueur et accouplé à la zone de liaison (163) des éléments de caisson (154), la variation de la longueur de ce câble produisant une torsion d'au moins un corps vertébral (61) entraînant une variation de la forme des caissons de torsion (53) et corrélativement de celle du profil de l'aile.

14. Aile selon la revendication 11, 12 ou 13, **caractérisée en ce qu'**il est prévu plusieurs éléments de caisson (154) disposés les uns derrière les autres et accouplés chacun à un câble d'entraînement (162a).

15. Aile selon la revendication 11, 12, 13 ou 14, **caractérisée en ce que** pour compenser le mouvement relatif du premier revêtement (55a) et de l'élément de caisson (154), sont prévues des articulations pendulaires (168) par lesquelles la zone de transmission (164) des éléments de caisson (154) est accouplée au premier revêtement (55a).

16. Aile selon une des revendications 11 à 15, **caractérisée en ce que** les zones d'articulation (169) et/ou les articulations pendulaires (168) sont constituées par des éléments d'articulation.

17. Aile selon la revendication 16, **caractérisée en ce que** les zones d'articulation (169) et/ou les articulations pendulaires (168) sont constituées par des bandes (172, 174) élastiques en flexion.

18. Aile selon une des revendications 11 à 17, **caractérisée en ce que** les zones d'articulation (169) et/ou les articulations pendulaires (168) sont constituées par une articulation commune.

19. Aile selon la revendication 18, **caractérisée en ce que** l'articulation commune (168, 169) est constituée par des bandes (172, 174) élastiques en flexion qui se croisent et qui sont disposées chacune respectivement dans le prolongement des ailes (154a, 154b) de l'élément de caisson triangulaire, ces bandes étant fixées de l'autre côté sur le premier revêtement (55a) de l'aile (1).

20. Aile selon la revendication 19, **caractérisée en ce que** dans l'espace délimité par les bandes (172, 174) élastiques en flexion et qui se croisent, est prévue une pièce de remplissage (176) constituée notamment d'un matériau élastique.

21. Aile selon une des revendications 11 à 20, **caractérisée en ce qu'**il est prévu un élément d'entretoise ou de cloison (177) qui s'étend du premier revêtement (55a) au second revêtement (55b) avec sa direction longitudinale parallèle à celle des éléments de caisson (154), en étant d'un côté fixé par une première liaison articulée (178) au premier revêtement (55a) ou, près de celui-ci, sur le côté des éléments de caisson (154), notamment sur la zone d'articulation (169) et/ou sur l'articulation pendulaire (168), tandis que du côté opposé, il est fixé au second revêtement (55b) par une seconde articulation (179).

22. Aile selon la revendication 21, **caractérisée en ce que** la première liaison articulée (178) et/ou la seconde liaison articulée (179) est constituée par des bandes élastiques.

23. Aile selon une des revendications 13 à 22, **caractérisée en ce que** le câble d'entraînement (162a) est accouplé par un ruban élastique (164) à la zone de liaison (163) des éléments de caisson (154).

24. Aile selon une des revendications 11 à 23, **caractérisée en ce qu'**entre le premier revêtement (55a) et le second revêtement (55b) est prévu un espaceur (181 ; 281) qui maintient une distance prédéfinie entre ces revêtements (55a, 55b) tout en leur permettant de se déplacer l'un par rapport à l'autre quand varie le profil de l'aile.

25. Aile selon la revendication 24, **caractérisée en ce que** l'espaceur (181 ; 281) est un élément (182 ; 282) en forme de cylindre qui comprend un système flexible à bandes (183a, b ; 283a, b) pour guider l'élément (182 ; 282) de sorte que celui-ci roule entre le premier revêtement (55a) et le second revêtement (55b) quand ces éléments se déplacent l'un par rapport à l'autre.

26. Aile selon la revendication 25, **caractérisée en ce que** le système flexible à bande (183a, b ; 283a, b) comprend au moins une bande flexible qui passe autour de l'élément (182 ; 282) en forme de rouleau et qui est fixée par ses extrémités au premier et au second revêtement (55a, 55b).

27. Aile selon la revendication 26, **caractérisée en ce que** l'élément (282) en forme de cylindre est divisé en deux moitiés par son milieu et la bande flexible (283a, b) traverse le milieu pour, à partir de là et avec inversion de sens, passer le long de chaque moitié de l'élément (282) en forme de cylindre.
